# EUROPÄISCHE PATENTSCHRIFT

(11) **EP 1 816 729 B1**
(45) Veröffentlichungstag und Bekanntmachung des Hinweises auf die Patenterteilung: **21.10.2015**
(21) Anmeldenummer: 06024881.2
(22) Anmeldetag: 01.12.2006
(51) Int. Cl.: H02K 7/08

(54) **Elektromotor**
Electric motor
Moteur électrique

(30) Priorität: 03.02.2006 DE 202006002069 U
(43) Veröffentlichungstag der Anmeldung: 08.08.2007
(73) Patentinhaber: ebm-papst St. Georgen GmbH & Co. KG, 78112 St. Georgen (DE)
(72) Erfinder: Serowy, Boris, 78048 VS-Villingen (DE); Maier, Bernd, 78098 Triberg (DE)
(74) Vertreter: Raible, Tobias

(56) Entgegenhaltungen:
- JP-A- H02 254 952
- JP-A- 2002 031 088
- JP-A- 2005 140 339
- JP-U- S61 122 397
- US-A- 4 737 673
- US-B1- 6 320 291

## Beschreibung

Die Erfindung betrifft einen elektronisch kommutierten Motor, insbesondere einen Klein-und Kleinstmotor. Solche Motoren werden bevorzugt in Klein- oder Kleinstlüftern verwendet.

Solche Klein- und Kleinstlüfter haben sehr geringe Abmessungen und dementsprechend ein sehr geringes Gewicht. Beispielsweise haben die Lüfter der ebm-papst Serie 250 Abmessungen von 8 x 25 x 25 mm und ein Gewicht von ca. 5 g. Bei Lüftern der ebm-papst Serie 400 betragen die Abmessungen 20 x 40 x 40 mm und das Gewicht beträgt < 30 g. Die Motoren sind korrespondierend hierzu noch kleiner und wiegen noch weniger.

Bei derartigen Motoren muss die Montage einfach und unkompliziert sein, um eine kostengünstige Herstellung und einen hohen Automatisierungsgrad zu ermöglichen. Durch eine weitgehende Automatisierung kann eine gleichmäßige Qualität erzielt werden, welche für eine hohe mittlere Lebensdauer Voraussetzung ist.

Die JP 2005 140339 A zeigt einen Spindelantrieb mit einem fluiddynamischen Lager, das von einem Gehäuse und einem Deckel umgeben ist.

Die US 6 320 291 B1 zeigt einen Motor mit einer Basis, an der zwei fächerförmige Teile und ein ringförmiger Vorsprung vorgesehen sind. Ein Lager ist zwischen den fächerförmigen Teilen eingesetzt, und eine Wicklungsanordnung mit Schnappgliedern wird von oben aufgesetzt, so dass die Schnappglieder am ringförmigen Vorsprung einschnappen. Die Wicklungsanordnung hat einen oberen Vorsprung, und das Lager ist zwischen dem oberen Vorsprung und dem ringförmigen Vorsprung angeordnet.

Die US 4 737 673A zeigt einen Motor, bei dem ein Sinterlager in einem Lagertragrohr angeordnet ist. Das Sinterlager ist zwischen einer Schulter des Lagertragrohrs und einer Schulter eines Abschlusselements eingeklemmt.

Die JP H02 254952 A zeigt einen Motor mit einem geraden, rohrförmigen Lagerhalter, in dem zwei aneinander anliegende Kugellager angeordnet sind. Ein in den Lagerhalter hinein ragender Vorsprung ist durch Spritzguss erzeugt. Das magnetische Zentrum des Statorkerns und das Zentrum des Rotormagneten sind gegeneinander versetzt, so dass ein magnetischer Zug entsteht, der die Welle in die Lageranordnung hinein zieht.

Es ist deshalb eine Aufgabe der Erfindung, einen neuen Klein- oder Kleinstmotor bereit zu stellen.

Nach der Erfindung wird diese Aufgabe gelöst durch einen Motor gemäß Anspruch 1. Bevorzugte Ausführungsformen sind Gegenstand der Unteransprüche.

Insbesondere lässt sich ein erfindungsgemäßer Motor sehr kompakt bauen.

Weitere Einzelheiten und vorteilhafte Weiterbildungen der Erfindung ergeben sich aus den im folgenden beschriebenen und in den Zeichnungen dargestellten, in keiner Weise als Einschränkung der Erfindung zu verstehenden Ausführungsbeispielen, sowie aus den Unteransprüchen. Es zeigt:
- Fig. 1: einen Längsschnitt durch einen Lüfter, welcher von einem Kleinstmotor angetrieben wird,
- Fig. 2: eine Explosionsdarstellung des Lüfters der Fig. 1,
- Fig. 3: eine Schnittansicht des Lagerrohrs der Fig. 1 und 2,
- Fig. 4: eine Schnittansicht des Lagerrohrs von Fig. 3 mit einer darin angeordneten Lageranordnung gemäß Fig. 5,
- Fig. 5: eine Explosionsdarstellung des Lagerrohrs von Fig. 3 einschließlich der Lager,
- Fig. 6: eine Schnittansicht der Anordnung gemäß Fig. 5 mit einem daran angespritzten Kunststoffteil in Form eines Flansches, und
- Fig. 7: eine Draufsicht auf eine Anordnung analog Fig. 6.

In der nachfolgenden Beschreibung beziehen sich die Begriffe links, rechts, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

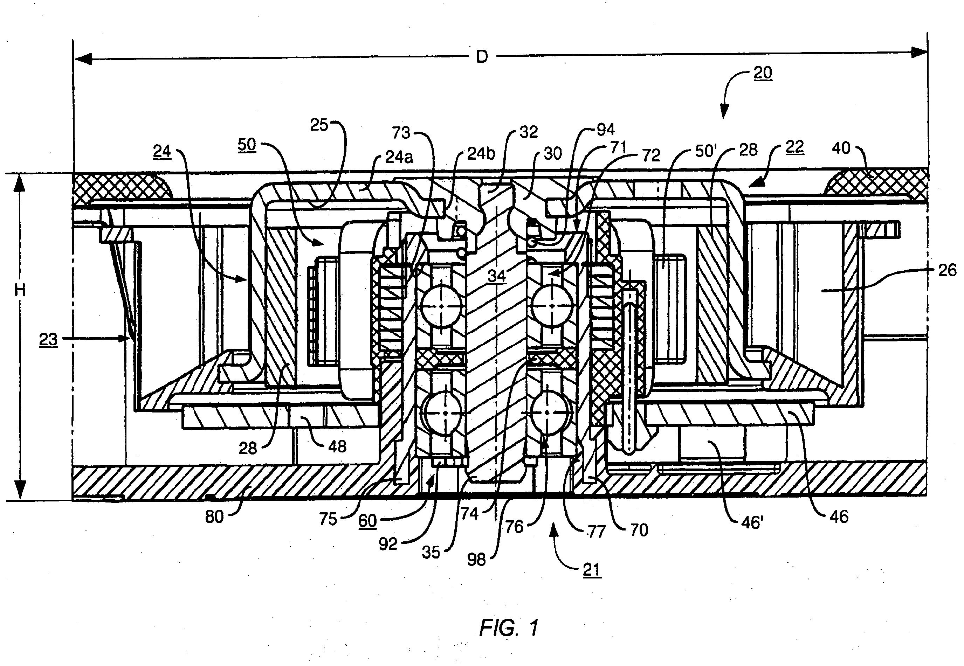

**Fig. 1** zeigt einen Längsschnitt durch einen Radiallüfter 20 mit einem Motor 21 gemäß einer bevorzugten Ausführungsform der Erfindung in stark vergrößertem Maßstab. Bei einer praktischen Ausführung des Lüfters, wie er in Fig. 1 dargestellt ist, betrug die Höhe H 15 mm, und das Maß D betrug 51 mm, d.h. Fig. 1 stellt diesen Lüfter in etwa 4,5-facher Vergrößerung dar.

Der Motor 21 hat einen Außenrotor 22, einen Innenstator 50 mit einem Statorblechpaket 50' und ein an einem Kunststoffteil 80 befestigtes Lagerrohr 70.

Der Außenrotor 22 hat eine Rotorglocke 24 aus tiefgezogenem Weicheisen, an deren Außenumfang ein Lüfterrad 23 mit Lüfterflügeln 26 vorgesehen ist. Am inneren Umfang der Rotorglocke 24 ist ein Rotormagnet 28 befestigt, der z.B. vierpolig magnetisiert sein kann. Die Rotorglocke 24 hat einen Boden 24a mit einer zentralen Ausnehmung 24b, welche über eine Nabe 30 (aus einer Druckgusslegierung, z. B. Zamak® oder dgl.), mit dem oberen Ende 32 einer Rotorwelle 34 verbunden ist, die ein unteres, freies Wellenende 35 hat.

Der Innenstator 50 des Motors 21 ist auf der Außenseite des Lagerrohrs 70 befestigt. Dort ist auch eine Leiterplatte 46 mit einem Hall-IC 48 angeordnet, auf der sich Bauteile für die elektronische Kommutierung des Motors 21, wie beispielsweise ein IC 46', befinden. Wie aus Fig. 1 ersichtlich, ist die Leiterplatte 46 zwischen dem Rotormagneten 28 und dem Statorblechpaket 50' einerseits und dem IC 46' andererseits angeordnet, um somit einen wirksamen Strahlenschutz des IC's 46' vor elektromagnetischer Strahlung, welche im Betrieb des Motors 21 von dem Rotormagneten 28 und dem Statorblechpaket 50' erzeugt wird, zu bewirken.

Im Inneren des Lagerrohrs 70 ist zur Lagerung der Welle 34 eine Lageranordnung 60 angeordnet. Diese hat oben ein erstes Wälzlager 72 und unten ein zweites Wälzlager 76, welche in einem vorgegebenen Abstand voneinander angeordnet sind. Dieser Abstand wird durch ein Distanzglied 74 definiert, z.B. wie dargestellt, eine Ringscheibe. Die Lageranordnung 60 ist hierbei jedoch nicht auf einen bestimmten Lagertyp beschränkt, vielmehr können verschiedene Lagertypen verwendet werden, z.B. Gleitlager.

Das in Fig. 1 obere Ende 71 des Lagerrohrs 70 ist der Innenseite 25 der Rotorglocke 24 zugewandt und auf seiner inneren Seite mit einem Anschlag 73 versehen, gegen den der Außenring 72" des Wälzlagers 72 anliegt. Das in Fig. 1 untere Ende 75 des Lagerrohrs 70 ist an seiner inneren Seite mit einer Erweiterung 78 versehen, um ein Einführen der Wälzlager 72, 76 in das Lagerrohr 70 zu erleichtern.

Das untere Ende 75 des Lagerrohrs 70 ist durch Kunststoffspritzen derart am Kunststoffteil 80 befestigt, dass der an das Lagerrohr 70 angespritzte Kunststoff einen Anschlag 77 bildet, gegen den der Außenring 76" des unteren Wälzlagers 76 anliegt. Das in das Kunststoffteil 80 eingespritzte untere Ende 75 wird durch ein Klebeschild 98 aus Metall, oder eine andere geeignete Abdeckung, abgedeckt. Das Klebeschild 98 kann als Typenschild dienen.

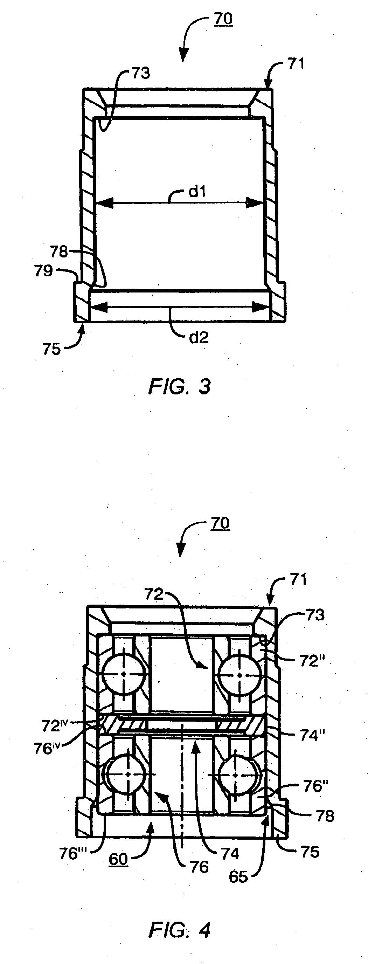

Das Lagerrohr 70 und die Lageranordnung 60 sind bei Fig. 3 bis Fig. 5 im Detail beschrieben.

Wie Fig. 1 zeigt, wird die Welle 34 durch einen als Stützglied bzw. Sicherungselement dienenden Sprengring 92 und eine schematisch dargestellte Druckfeder 94 gehalten. Der Sprengring 92 ist in eine Ringnut am freien Ende 35 der Welle 34 eingerastet. Die Druckfeder 94 ist zwischen dem Innenring 72' des Wälzlagers 72 und der Nabe 30 angeordnet. Durch die Druckfeder 94 wird der Sprengring 92 gegen das zweite Wälzlager 76 gedrückt, sodass die Kugellager 72, 76 gegen einander verspannt werden.

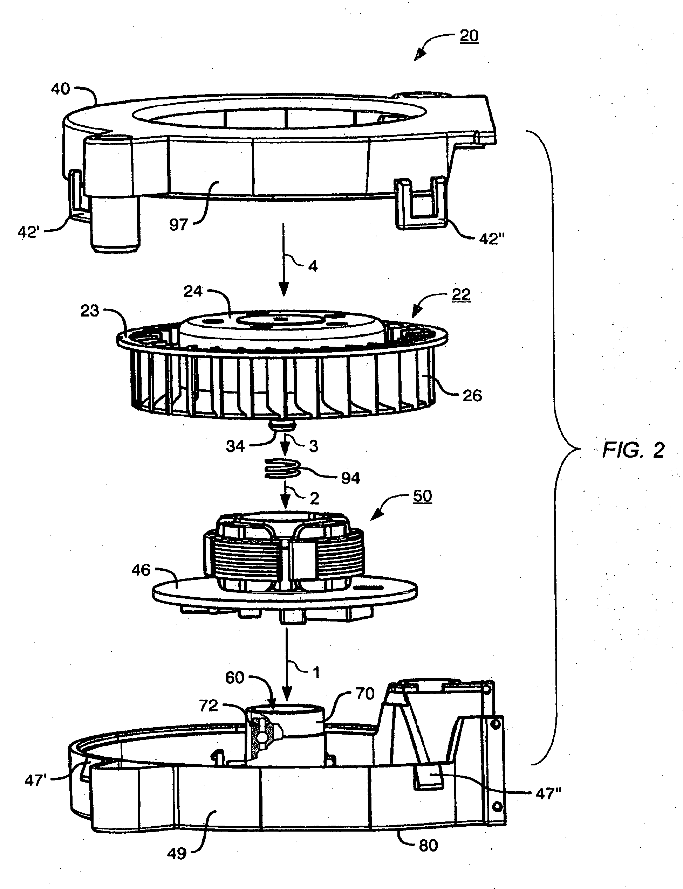

**Fig. 2** zeigt eine Explosionsdarstellung des Lüfters 20 von Fig. 1 in räumlicher Darstellung, welche die Montage verdeutlicht. Komponenten des Lüfters 20 sind als vormontierte Komponenten dargestellt, welche gemäß Fig. 2 montiert werden.

In einem ersten Arbeitsschritt wird der Innenstator 50 zusammen mit der Leiterplatte 46 auf der Außenseite des Lagerrohrs 70 angeordnet, wie mit einem Pfeil 1 angedeutet ist. Wie Fig. 2 zeigt, hat das Kunststoffteil 80 eine nach oben gerichtete Wand 49, an welcher nach außen gerichtete Rasthaken 47', 47" angeordnet sind.

In einem zweiten Arbeitsschritt wird die Druckfeder 94 auf der in dem Lagerrohr 70 angeordneten Lageranordnung 60 (vgl. Fig. 1) angeordnet, wie es mit einem Pfeil 2 angedeutet ist. Alternativ kann die Druckfeder 94 auf der Welle 34 am Außenrotor 22 befestigt sein.

In einem dritten Arbeitsschritt wird die Welle 34 des Rotors 22, dessen Lüfterrad 23 mit den Flügeln 26 in Fig. 2 beispielhaft dargestellt ist, durch die Druckfeder 94 hindurch in das Lagerrohr 70 eingeführt, wie mit einem Pfeil 3 angedeutet ist, so dass die Rotorglocke 24 den Innenstator 50 glockenartig umgibt. Anschließend wird die Welle 34 in der Lageranordnung 60 mit dem Sprengring 92 gegen Abziehen gesichert.

In einem abschließenden Arbeitsschritt wird ein Deckelteil 40 an dem Kunststoffteil 80 befestigt, wie mit einem Pfeil 4 angedeutet. Das Deckelteil 40 hat eine - in Fig. 2 - nach unten gerichtete Wand 97, an welcher nach außen gerichtete Rastglieder 42', 42" angeordnet sind. Letztere werden bei der Montage des Deckelteils 40 an bzw. auf dem Teil 80 über die Rasthaken 47', 47" des Teils 80 geschoben, bilden eine Rastverbindung mit diesem, und bilden ein Lüftergehäuse, das die Komponenten des Lüfters 20 vor externen Einflüssen schützt.

**Fig. 3** zeigt einen Längsschnitt durch das Lagerrohr 70. Dieses hat oben eine einen Anschlag bildende Schulter 73 und unten die Erweiterung 78. Der Innendurchmesser d1 des Lagerrohrs 70 wird durch die Erweiterung 78 auf einen Innendurchmesser d2 erweitert (d1 < d2). Am äußeren Umfang des Lagerrohrs 70 befindet sich im Bereich der Erweiterung 78 eine Schulter 79, welche beim Einspritzen des Lagerrohrs 70 in das Teil 80 eine zusätzliche Sicherung gegen ein Lösen des Lagerrohrs 70 aus dem Teil 80 bildet.

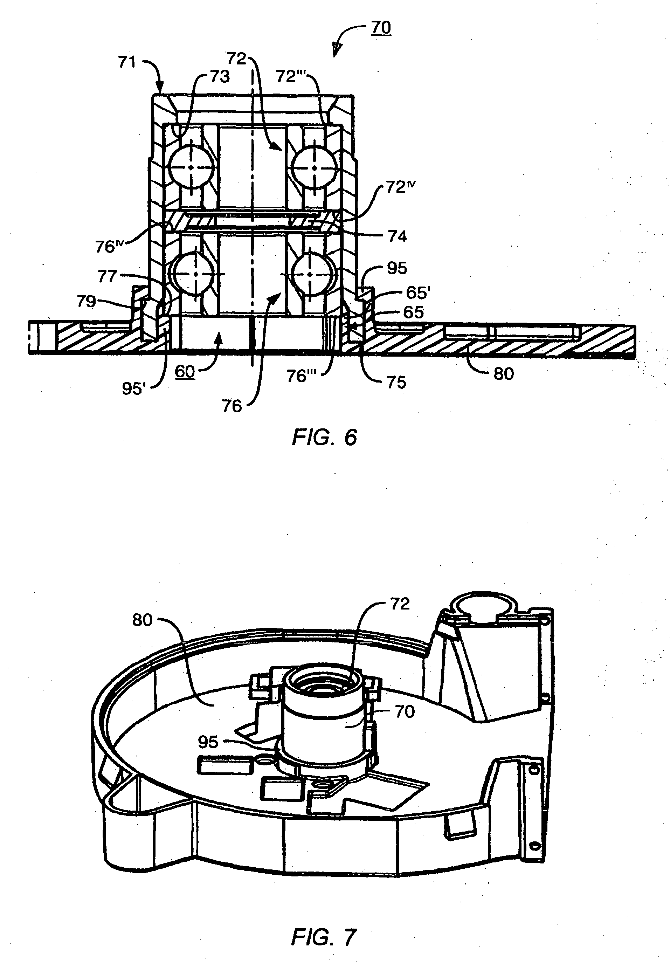

**Fig. 4** zeigt einen Längsschnitt durch das Lagerrohr 70 und die darin angeordnete Lageranordnung 60. Eine obere Stirnseite 72'" des Außenrings 72" liegt gegen den Anschlag 73 an. Zwischen den Außenringen 72" und 76" ist das Distanzglied 74 angeordnet, das gegen eine untere Stirnseite 72^{IV} des Außenrings 72" und eine obere Stirnseite 76^{IV} des Außenrings 76" anliegt. Unten ist zwischen dem Außenring 76" und der Innenseite des Lagerrohrs 70 ein Hohlraum 65 vorgesehen, welcher bevorzugt bei der Befestigung des Lagerrohrs 70 am Teil 80 zumindest teilweise mit Kunststoff gefüllt wird, wobei der Anschlag 77 (Fig. 6) gebildet wird, der gegen eine untere Stirnseite 76'" des Außenrings 76" anliegt (Fig. 6).

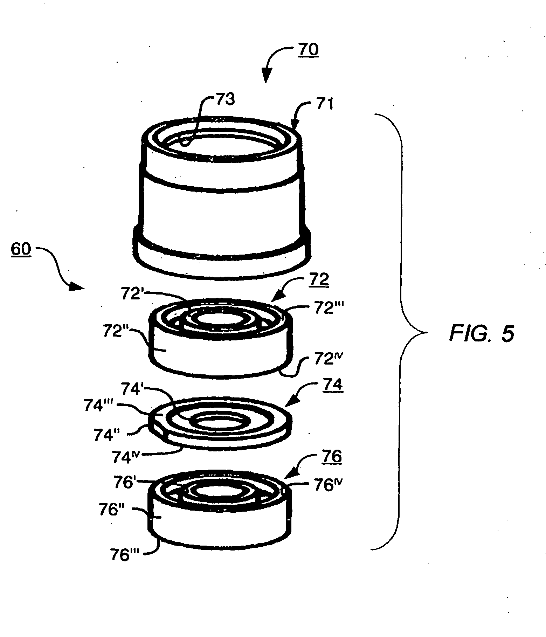

**Fig. 5** zeigt eine Explosionsdarstellung des Lagerrohrs 70 und der Lageranordnung 60. Das Distanzglied 74 ist an seinem äußeren Umfang 74" dicker als an seinem inneren Umfang 74'.

Zur Montage wird zuerst das Wälzlager 72 - in Fig. 4 von unten - derart in das Lagerrohr 70 eingeführt, dass die obere Stirnseite 72'" des Außenrings 72" dieses Lagers 72 gegen den Anschlag 73 am oberen Ende 71 des Lagerrohrs 70 anliegt. Dann wird das Distanzglied 74 derart in das Lagerrohr 70 eingeführt, das dessen obere Seite 74"' gegen die untere Stirnseite 72^{IV} des Außenrings 72" anliegt. Schließlich wird das Wälzlager 76 derart in das Lagerrohr 70 eingeführt, dass die obere Stirnseite 76^{IV} des Außenrings 76" dieses Lagers 76 gegen die untere Seite 74^{IV} des Distanzglieds 74 anliegt.

Um hierbei die Wälzlager 72, 76 und das Distanzglied 74 gegen ein Herausgleiten aus dem Lagerrohr 70 zu sichern, kann der Innendurchmesser d1 des Lagerrohrs 70 so gewählt werden, dass dieser etwas kleiner ist als der Durchmesser der Lager 72, 76, sodass diese bei der Montage in das Rohr 70 eingepresst werden.

**Fig. 6** zeigt einen Längsschnitt durch das Lagerrohr 70 mit der darin angeordneten Lageranordnung 60 sowie dem an das Lagerrohr 70 angespritzten Teil 80 gemäß Fig. 2, welches ein anwendungsspezifisch ausgebildetes Teil sein kann. Der an das Lagerrohr 70 angespritzte Kunststoff des Teils 80 bildet einen äußeren Ring 95, welcher an der Schulter 79 des Lagerrohrs 70 anliegt und somit eine stabile Verbindung dieser Komponenten bewirkt.

Wie aus Fig. 6 ersichtlich, bildet der angespritzte Kunststoff des Teils 80 auch einen inneren Ring 95', welcher den Hohlraum 65 mit Kunststoff 65' zumindest teilweise ausfüllt und den Anschlag 77 bildet.

Es wird jedoch darauf hingewiesen, dass das Anspritzen des Teils 80 an das Lagerrohr 70 lediglich beispielhaft als ein bevorzugtes Verfahren zur Befestigung des Lagerrohrs 70 am Teil 80 beschrieben ist. Andere Verfahren sind ebenfalls möglich. Beispielsweise kann das Teil 80 unabhängig vom Lagerrohr 70 hergestellt werden, welches in diesem Fall auf das Kunststoffteil 80 aufgesteckt wird.

Fig. 6 verdeutlicht die Ausbildung der Anschläge 73, 77 in den Endbereichen des Lagerrohrs 70, d.h. an dessen oberem und unterem Ende 71 bzw. 75.

**Fig. 7** zeigt das Lagerrohr 70 mit dem daran befestigten Kunststoffteil 80 in einer räumlichen Darstellung zur Verdeutlichung des Rings 95.

Naturgemäß sind im Rahmen der vorliegenden Erfindung vielfache Abwandlungen und Modifikationen möglich.

## Patentansprüche

1. Elektromotor (21), welcher aufweist:
Einen Innenstator (50);
einen Außenrotor (22) mit einer Welle (34), welcher Außenrotor nach Art einer Rotorglocke (24) ausgebildet ist, die eine Außenseite und eine Innenseite (25) aufweist;
ein Lagerrohr (70) zur Aufnahme einer die Welle (34) lagernden Lageranordnung (60),
welche Lageranordnung (60) ein erstes Wälzlager (72) und ein zweites Wälzlager (76) aufweist, welche jeweils einen Außenring (72", 76") und einen Innenring (72', 76') aufweisen,
welches Lagerrohr (70) ein erstes Ende (71) hat, das der Innenseite (25) des Außenrotors (22) zugewandt ist;
und welches ein zweites Ende (75) hat, das vom ersten Ende (71) abgewandt und mit einem Kunststoffteil (80) verbunden ist, welches im Bereich des zweiten Endes (75) einen nach innen ragenden Anschlag (77) bildet,
wobei das erste Wälzlager (72) im Bereich des ersten Endes (71) und das zweite Wälzlager (76) im Bereich des zweiten Endes (75) des Lagerrohres (70) angeordnet ist,
wobei eine Stirnseite (76'") des Außenrings (76") des zweiten Wälzlagers (76) gegen den Anschlag (77) im Bereich des zweiten Endes (75) des Lagerrohrs (70) anliegt,
**dadurch gekennzeichnet, dass** das Lagerrohr (70) als Formstück aus Metall ausgebildet ist,
wobei das erste Ende des Lagerrohrs (70) ebenfalls mit einem nach innen ragenden Anschlag (73) versehen ist,
wobei die Lageranordnung (60) im Lagerrohr (70) zwischen diesen beiden nach innen ragenden Anschlägen (73, 77) angeordnet ist,
wobei die innere Seite des zweiten Endes (75) des Lagerrohrs (70) eine Erweiterung (78) aufweist, um ein Einführen der Lageranordnung (60) in das Lagerrohr (70) zu erleichtern,
wobei im Bereich zwischen der Innenseite der Erweiterung (78) des zweiten Endes (75) des Lagerrohrs (70) und dem Außenring (76") des zweiten Wälzlagers (76) Kunststoff (65') des Kunststoffteils (80) angeordnet ist,
und wobei zwischen der Innenseite (25) des Außenrotors (22) und dem Innenring (72') des ersten Wälzlagers (72") eine Druckfeder (94) vorgesehen ist, welche diesen Innenring (72') in Richtung des zweiten Wälzlagers (76) beaufschlagt.

2. Motor nach Anspruch 1, bei welchem die äußere Seite des Lagerrohrs (70) im Bereich der Erweiterung (78) des zweiten Endes (75) eine Schulter (79) aufweist.

3. Motor nach Anspruch 1 oder 2, bei welchem eine Stirnseite (72"') des Außenrings (72") des ersten Wälzlagers (72) gegen den Anschlag (73) am ersten Ende (71) des Lagerrohrs (70) anliegt.

4. Motor nach einem der vorhergehenden Ansprüche, bei welchem zwischen dem Außenring (72") des ersten Wälzlagers (72) und dem Außenring (76") des zweiten Wälzlagers (76) ein Distanzglied (74) vorgesehen ist, welches einen vorgegebenen Abstand zwischen den Außenringen (72", 76") definiert.

5. Motor nach Anspruch 4, bei welchem eine Stirnseite (72^{IV}) des einen Außenrings (72") gegen eine Seite des Distanzglieds (74) und eine Stirnseite (76^{IV}) des anderen Außenrings (76") gegen eine andere Seite des Distanzglieds (74) anliegt.

6. Motor nach einem der vorhergehenden Ansprüche, bei welchem der Innenring (76') des zweiten Wälzlagers (76) an einem Stützglied (92) abgestützt ist, welches an der Welle (34) des Außenrotors (22) angeordnet ist.

7. Motor nach Anspruch 6, bei welchem das Stützglied als Sprengring (92) ausgebildet ist.

8. Motor nach einem der vorhergehenden Ansprüche, welcher in einen Klein- oder Kleinstlüfter (20) eingebaut ist.

9. Motor nach Anspruch 8, bei welchem das Kunststoffteil (80) als Flansch des Lüfters (20) ausgebildet ist.

10. Motor nach Anspruch 9, bei welchem das Kunststoffteil (80) mit einem Deckelteil (40) zu einem Lüftergehäuse verbunden ist.

11. Motor nach Anspruch 10, bei welchem das Deckelteil (40) durch eine Rastverbindung (42', 47') mit dem Kunststoffteil (80) verbunden ist.

12. Motor nach einem der vorhergehenden Ansprüche, bei welchem an der Rotorglocke (24) ein Lüfterrad (23) vorgesehen ist.

13. Motor nach Anspruch 12, bei welchem die Rotorglocke (24) durch eine Nabe (30) mit einem Ende (32) der Welle (34) verbunden ist.

14. Motor nach Anspruch 12 oder 13, bei welchem am Lüfterrad (23) Lüfterflügel (26) vorgesehen sind.

15. Motor nach einem der Ansprüche 8 bis 14, welcher als elektronisch kommutierter Motor ausgebildet ist.

## Claims

1. Electric motor (21) which comprises:
An internal stator (50);
an external rotor (22) having a shaft (34), which external rotor is configured in the manner of a rotor bell (24) having an outer side and an inner side (25);
a bearing tube (70) for reception of a bearing arrangement (60) supporting the shaft (34),
which bearing arrangement (60) comprises a first rolling bearing (72) and a second rolling bearing (76) which each comprise an outer ring (72", 76") and an inner ring (72', 76'),
which bearing tube (70) has a first end (71) facing towards the inner side (25) of the external rotor (22);
and which bearing tube has a second end (75) facing away from the first end (71) and connected to a plastic part (80) which forms an inwardly protruding stop (77) in the region of the second end (75),
the first rolling bearing (72) being arranged in the region of the first end (71), and the second rolling bearing (76) being arranged in the region of the second end (75) of the bearing tube (70),
an end face (76"') of the outer ring (76") of the second rolling bearing (76) abutting against the stop (77) in the region of the second end (75) of the bearing tube (70),
**characterised in that** the bearing tube (70) is configured as a shaped piece made of metal,
the first end of the bearing tube (70) likewise being provided with an inwardly protruding stop (73),
the bearing arrangement (60) being arranged in the bearing tube (70) between these two inwardly protruding stops (73, 77),
the inner side of the second end (75) of the bearing tube (70) having an enlargement (78) to facilitate introduction of the bearing arrangement (60) into the bearing tube (70),
plastic (65') of the plastic part (80) being arranged in the region between the inner side of the enlargement (78) of the second end (75) of the bearing tube (70) and the outer ring (76") of the second rolling bearing (76),
and there being provided, between the inner side (25) of the external rotor (22) and the inner ring (72') of the first rolling bearing (72"), a compression spring (94) which biases this inner ring (72') in the direction of the second rolling bearing (76).

2. Motor according to Claim 1, in which the outer side of the bearing tube (70) comprises a shoulder (79) in the region of the enlargement (78) of the second end (75).

3. Motor according to Claim 1 or 2, in which an end face (72"') of the outer ring (72") of the first rolling bearing (72) abuts against the stop (73) at the first end (71) of the bearing tube (70).

4. Motor according to one of the preceding claims, in which, between the outer ring (72") of the first rolling bearing (72) and the outer ring (76") of the second rolling bearing (76), a spacing member (74) is provided, which defines a predetermined distance between the outer rings (72", 76").

5. Motor according to Claim 4, in which an end face (72^{IV}) of one outer ring (72") abuts against a face of the spacing member (74), and an end face (76^{IV}) of the other outer ring (76") abuts against another face of the spacing member (74).

6. Motor according to one of the preceding claims, in which the inner ring (76') of the second rolling bearing (76) is supported on a supporting member (92) which is arranged on the shaft (34) of the external rotor (22).

7. Motor according to Claim 6, in which the supporting member is configured as a snap ring (92).

8. Motor according to one of the preceding claims, which is installed in a miniature or subminiature fan (20).

9. Motor according to Claim 8, in which the plastic part (80) is configured as a flange of the fan (20).

10. Motor according to Claim 9, in which the plastic part (80) is connected to a cover part (40) to form a fan housing.

11. Motor according to Claim 10, in which the cover part (40) is connected to the plastic part (80) by a latching connection (42', 47').

12. Motor according to one of the preceding claims, in which a fan wheel (23) is provided on the rotor bell (24).

13. Motor according to Claim 12, in which the rotor bell (24) is connected to one end (32) of the shaft (34) by a hub (30).

14. Motor according to Claim 12 or 13, in which fan blades (26) are provided on the fan wheel (23).

15. Motor according to one of Claims 8 to 14, which is configured as an electronically commutated motor.

## Revendications

1. Moteur électrique (21) comprenant :
un stator intérieur (50) ;
un rotor extérieur (22) pourvu d'un arbre (34), lequel rotor extérieur est réalisé à la manière d'une cloche rotorique (24) comportant une face externe et une face interne (25) ;
un tube de montage (70), conçu pour recevoir un ensemble (60) de paliers assurant le montage dudit arbre (34),
lequel ensemble (60) de paliers comprend un premier palier à roulement (72) et un second palier à roulement (76) munis, respectivement, d'une bague extérieure (72", 76") et d'une bague intérieure (72', 76'),
ledit tube de montage (70) présentant une première extrémité (71) tournée vers la face interne (25) du rotor extérieur (22)
et une seconde extrémité (75) qui est tournée à l'opposé de ladite première extrémité (71) et est reliée à une pièce (80) en matière plastique formant une butée (77) en saillie vers l'intérieur, dans la région de ladite seconde extrémité (75),
le premier palier à roulement (72) étant disposé dans la région de ladite première extrémité (71), et le second palier à roulement (76) étant disposé dans la région de la seconde extrémité (75) dudit tube de montage (70),
une face extrême (76"') de la bague extérieure (76") dudit second palier à roulement (76) étant en applique contre ladite butée (77), dans la région de ladite seconde extrémité (75) du tube de montage (70),
**caractérisé par le fait que** le tube de montage (70) est réalisé sous la forme d'une pièce moulée en métal,
la première extrémité dudit tube de montage (70) étant semblablement dotée d'une butée (73) en saillie vers l'intérieur,
l'ensemble (60) de paliers étant interposé, dans ledit tube de montage (70), entre ces deux butées (73, 77) en saillie vers l'intérieur,
la face interne de la seconde extrémité (75) du tube de montage (70) offrant un évasement (78), en vue de faciliter une introduction dudit ensemble (60) de paliers dans ledit tube de montage (70),
sachant que de la matière plastique (65'), constituant la pièce (80), se trouve dans la région située entre la bague extérieure (76") du second palier à roulement (76) et la face interne de l'évasement (78) de la seconde extrémité (75) du tube de montage (70),
et sachant qu'un ressort de pression (94), prévu entre la face interne (25) du rotor extérieur (22) et la bague intérieure (72') du premier palier à roulement (72), sollicite cette bague intérieure (72') en direction du second palier à roulement (76).

2. Moteur selon la revendication 1, dans lequel la face externe du tube de montage (70) offre un épaulement (79) dans la région de l'évasement (78) de la seconde extrémité (75).

3. Moteur selon la revendication 1 ou 2, dans lequel une face extrême (72"') de la bague extérieure (72") du premier palier à roulement (72) est en applique contre la butée (73) au niveau de la première extrémité (71) du tube de montage (70).

4. Moteur selon l'une des revendications précédentes, dans lequel un organe d'espacement (74), prévu entre la bague extérieure (72") du premier palier à roulement (72) et la bague extérieure (76") du second palier à roulement (76), définit une distance préétablie entre lesdites bagues extérieures (72", 76").

5. Moteur selon la revendication 4, dans lequel une face extrême (72^{IV}) de l'une (72") des bagues extérieures est en applique contre un côté de l'organe d'espacement (74), et une face extrême (76^{IV}) de l'autre bague extérieure (76") est en applique contre un autre côté dudit organe d'espacement (74).

6. Moteur selon l'une des revendications précédentes, dans lequel la bague intérieure (76') du second palier à roulement (76) est en appui contre un organe de soutien (92) implanté sur l'arbre (34) du rotor extérieur (22).

7. Moteur selon la revendication 6, dans lequel l'organe de soutien est réalisé sous la forme d'un anneau élastique (92).

8. Moteur selon l'une des revendications précédentes, intégré dans un petit ventilateur ou dans un ventilateur miniaturisé (20).

9. Moteur selon la revendication 8, dans lequel la pièce (80) en matière plastique est réalisée sous la forme d'une aile de bridage du ventilateur (20).

10. Moteur selon la revendication 9, dans lequel la pièce (80) en matière plastique est reliée à une partie de recouvrement (40), pour former un carter de ventilateur.

11. Moteur selon la revendication 10, dans lequel la partie de recouvrement (40) est reliée à la pièce (80) en matière plastique par l'intermédiaire d'une liaison encliquetable (42', 47').

12. Moteur selon l'une des revendications précédentes, dans lequel une roue (23) de ventilateur est prévue sur la cloche rotorique (24).

13. Moteur selon la revendication 12, dans lequel la cloche rotorique (24) est reliée à une extrémité (32) de l'arbre (34) par l'intermédiaire d'un moyeu (30).

14. Moteur selon la revendication 12 ou 13, dans lequel des ailettes (26) de ventilateur sont prévues sur la roue (23) de ventilateur.

15. Moteur selon l'une des revendications 8 à 14, réalisé sous la forme d'un moteur à commutation électronique.
